**Europäisches Patentamt**

**European Patent Office**

**Office européen des brevets**

(11) Veröffentlichungsnummer: **0 232 475**

**A1**

# (12) EUROPÄISCHE PATENTANMELDUNG

(21) Anmeldenummer: **86115525.7**

(22) Anmeldetag: **08.11.86**

(51) Int. Cl.⁴: **F02M 51/06**

(30) Priorität: **31.01.86 DE 3602956**

(43) Veröffentlichungstag der Anmeldung:
**19.08.87 Patentblatt 87/34**

(84) Benannte Vertragsstaaten:
**DE FR GB IT SE**

(71) Anmelder: **VDO Adolf Schindling AG**
**Gräfstrasse 103**
**D-6000 Frankfurt/Main(DE)**

(72) Erfinder: **Szablewski, Piotr**
**Martinskirchstrasse 35**
**D-6000 Frankfurt am Main 71(DE)**
Erfinder: **Sauerschell, Wolfgang**
**Mauerfeldstrasse 18**
**D-6370 Oberursel(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Elektromagnetisch betätigbares Kraftstoffeinspritzventil.**

(57) Bei einem Kraftstoffeinspritzventil ist innerhalb eines Ventilgehäuses (1) ein Anker (7) mit einer oberen und einer unteren Führungsfläche (12, 13) vorgesehen. Mit der oberen Führungsfläche (12) ist der Anker (7) in einer Führungsbohrung (15) des Ventilgehäuses (1) unmittelbar unterhalb der Magnetwicklung (3) des Kraftstoffeinspritzventils geführt. Dadurch sind die magnetischen Flußverluste sehr gering.

EP 0 232 475 A1

## Elektromagnetisch betätigbares Kraftstoffeinspritzventil

Die Erfindung bezieht sich auf ein elektromagnetisch betätigbares Kraftstoffeinspritzventil für Einspritzanlagen von Brennkraftmaschinen, mit einem Ventilgehäuse, einem innerhalb des Ventilgehäuses angeordneten, von einer feststehenden Magnetwicklung umgebenen Weicheisenkern und einem diesen gleichachsig und unter Bildung eines Arbeitsluftspaltes gegenüberstehenden Anker, der ein einen Ventilauslaß steuerndes Ventilschließglied aufweist und eine untere sowie eine obere Führungsfläche hat, mit der er im Ventilgehäuse geführt ist, wobei die untere Führungsfläche nahe des Ventilschließgliedes vorgesehen ist. Derartige Einspritzventile werden derzeit in Kraftfahrzeugmotoren eingesetzt und sind daher allgemein bekannt.

Bei dem bekannten Kraftstoffeinspritzventil ist der Anker mit seinen beiden Führungsflächen in einem Düsenkörper und damit von der Magnetwicklung relativ weit weg geführt. Der Düsenkörper selbst ist in einer Innenbohrung des Ventilgehäuses dichtend geführt. Oberhalb der oberen Führungsfläche des Ankers hat dieser zum Ventilgehäuse hin überall erhebliches Spiel, damit es nicht zu einem Verklemmen des Ankers kommen kann.

Bei dem bekannten Einspritzventil muß der Magnetfluß zwischen Ventilgehäuse und dem Anker teilweise über einen relativ großen radialen Luftspalt unterhalb der Magnetwicklung und teilweise weit von der Magnetwicklung entfernt vom Ventilgehäuse über eine Führung zum Düsenkörper und von dort über eine weitere Führung zum Anker erfolgen. Dadurch kommt es zu Magnetflußverlusten, die bei der Bemessung der Magnetwicklung und des Ankers berücksichtigt werden müssen. Um zu einem möglichst trägheitsarmen und dadurch flinken Kraftstoffeinspritzventil zu kommen, ist es jedoch wünschenswert, einen möglichst massearmen Anker zu verwenden.

Der Erfindung liegt die Aufgabe zugrunde, ein Kraftstoffeinspritzventil der eingangs genannten Art zu entwickeln, welches im möglichst raschen Rhythmus öffnen und schließen kann.

Diese Aufgabe wird erfindungsgemäß dadurch gelöst, daß die obere Führungsfläche unmittelbar unterhalb der Magnetwicklung vorgesehen und dort innerhalb einer Führungsbohrung des Ventilgehäuses geführt ist.

Durch diese Gestaltung erfolgt der Magnetfluß unmittelbar unterhalb der Magnetwicklung vom Ventilgehäuse über nur eine einzige Führung zum Anker des Kraftstoffeinspritzventils. Dadurch sind die Magnetflußverluste sehr gering, so daß das Kraftstoffeinspritzventil mit einem massearmen Anker ausgerüstet werden kann. Dadurch wird er trägheitsarmer als der Anker vergleichbarer Kraftstoffeinspritzventile und kann sich somit flinker zwischen den beiden Schaltstellungen bewegen. Die geringeren Verluste des Magnetflusses zwischen dem Ventilgehäuse und dem Anker ermöglichen es, den Arbeitsluftspalt geringfügig größer zu bemessen, so daß auch bei ungünstigen Toleranzen keine Gefahr besteht, daß mit Veränderung des Hubes sich die Durchlaßmenge des Ventils ändert.

Die obere Führung des Ankers erfolgt zweckmäßigerweise dadurch, daß das Ventilgehäuse unmittelbar unterhalb der Magnetwicklung eine nach innen weisende Ringscheibe hat, in der die Führungsbohrung koaxial zum Weicheisenkern vorgesehen ist.

Die Begrenzung des Öffnungshubs des Ankers kann mit geringem Aufwand dadurch erfolgen, daß am Anker unterhalb der Ringscheibe ein flanschartiger, nach außen gerichteter, von unten her gegen die Ringscheibe bewegbarer Anschlagkragen vorgesehen ist.

Eine andere, ganz besonders vorteilhafte Ausgestaltung der Erfindung besteht darin, daß der Weicheisenkern durch ein Schraubteil gebildet ist, dessen ankerseitige Stirnfläche eine Begrenzung des Arbeitsluftspaltes bildet und welches axial verstellbar im Ventilgehäuse angeordnet ist.

Die Magnetwicklung kann durch den in Kraftstoffeinspritzventilen erforderlichen Kraftstoffrückfluß gekühlt werden, wenn gemäß einer anderen Ausgestaltung der Erfindung in der Ringscheibe zumindest ein zur Magnetwicklung führender, axialer Durchlaß vorgesehen ist und das Ventilgehäuse in Höhe des oberen Endes der Magnetwicklung einen Rücklaufauslaß hat. Der Kraftstoff im Kraftstoffeinspritzventil vermag teilweise auch in die obere Führung zu gelangen und dort eine Schmierwirkung herbeizuführen.

Der Kraftstoff gelangt auf kurzem Wege zum Kraftstoffauslaß, wenn eine Kraftstoffeinlaßöffnung unterhalb der Ringscheibe des Ventilgehäuses vorgesehen ist.

Auch die untere Führung des Ankers kann mit geringem Aufwand hergestellt werden, wenn die untere Führungsfläche des Ankers von einem Führungskörper geführt ist, der nach außen hin dichtend in einer koaxialen, nach unten hin offenen Innenbohrung des Ventilgehäuses sitzt.

Die Schließstellung des Ventilschließgliedes kann unabhängig vom Restluftspalt verstellt werden, wenn zwischen einer oberen Stirnfläche des Führungskörpers und einer zum Auslaß des Einspritzventils weisenden Schulter des Ventilgehäuses eine Distanzscheibe angeordnet ist und der Ventilsitz am Führungskörper vorgesehen ist.

Der Führungskörper selbst wird zweckmäßigerweise durch einen Düsenkörper in der Innenbohrung gehalten.

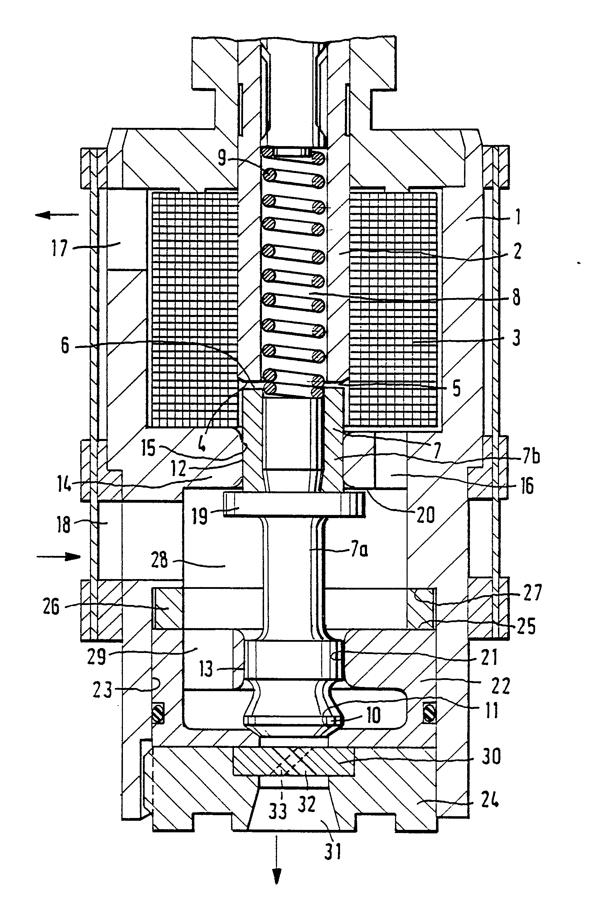

Die Erfindung läßt zahlreiche Ausführungsformen zu. Eine davon ist in der Zeichnung dargestellt und wird nachfolgend beschrieben. Diese zeigt einen Längsschnitt durch einen die Erfindung betreffenden Bereich eines erfindungsgemäßen Kraftstoffeinspritzventils.

Das dargestellte Kraftstoffeinspritzventil besitzt ein Ventilgehäuse 1, in dem um einen Weicheisenkern 2 herum eine Magnetwicklung 3 vorgesehen ist. Bei dem Weicheisenkern 2 handelt es sich um ein Schraubteil, welches von oben her in das Ventilgehäuse 1 eingeschraubt ist und durch mehr oder weniger tiefes Einschrauben in seiner axialen Stellung veränderbar ist. Der Weicheisenkern 2 bildet mit einer unteren Stirnfläche 4 eine obere Begrenzung eines Arbeitsluftspaltes 5, der nach unten hin durch eine obere Stirnfläche 6 eines Ankers 7 begrenzt wird. Der Anker 7 besteht bei diesem Ausführungsbeispiel aus einem Kern 7a und einer auf ihn aufgeschobenen Buchse 7b. Eine in einer Längsbohrung 8 des Weicheisenkerns 2 abgestützte Druckfeder 9 stützt sich mit ihrem anderen Ende am Anker 7 ab. Dadurch wird der Anker 7 nach unten hin vorgespannt.

An seinem, in der Zeichnung gesehen, unteren Ende weist der Anker 7 ein Ventilschließglied 10 auf, welches in der dargestellten Stellung dichtend auf einem Ventilsitz 11 aufsitzt. Wichtig für die Erfindung ist die Führung des Ankers 7. Dieser hat unmittelbar unterhalb der Magnetwicklung 3 eine obere Führungsfläche 12 und oberhalb des Ventilschließgliedes 10 eine untere Führungsfläche 13. Im Bereich der oberen Führungsfläche 12 hat das Ventilgehäuse 1 eine nach innen gerichtete Ringscheibe 14 mit einer koxialen Führungsbohrung 15, in der die Führungsfläche 13 geführt ist. Der Magnetfluß kann dadurch vom Ventilgehäuse 1 über die Ringscheibe 14 in den Anker 7 hinein und von dort über den Arbeitsluftspalt 5 zum Weicheisenkern 2 erfolgen.

Der Kraftstoff gelangt über eine Kraftstoffeinlaßöffnung 18 in das Kraftstoffeinspritzventil hinein. Ein Teilstrom fließt über einen axialen Durchlaß 16 in der Ringscheibe 14 oder mehreren Durchlässen zur Magnetwicklung 3 und verläßt das Kraftstoffeinspritzventil über einen Rücklaufauslaß 17 am oberen Ende der Magnetwicklung 3. Auf diese Weise wird die Magnetwicklung 3 ständig vom Kraftstoff gekühlt.

Unterhalb der Ringscheibe 14 ist am Anker 7 ein nach außen gerichteter Anschlagkragen 19 vorgesehen, der sich gegen eine untere Stirnfläche 20 der Ringscheibe 14 zu setzen vermag und dadurch den maximal möglichen Aufwärtshub des Ankers 7 begrenzt.

Die untere Führungsfläche 13 des Ankers 7 ist in einer Führungsbohrung 21 eines Führungskörpers 22 geführt. Dieser sitzt dichtend in einer Innenbohrung 23 des Ventilgehäuses 1 und wird durch einen Düsenkörper 24, der unterhalb des Führungskörpers 22 in der Innenbohrung 23 sitzt, in dieser Innenbohrung 23 gehalten. Der Führungskörper 22 hat an seiner unteren Seite den Ventilsitz 11, auf dem das Ventilschließglied 10 aufsitzt. Nach oben hin liegt der Führungskörper 22 mit einer oberen Stirnfläche 25 gegen einen Distanzring 26 an, der seinerseits gegen eine Schulter 27 des Ventilgehäuses 1 anliegt. Durch unterschiedlich dicke Distanzringe 26 kann man die Lage des Ventilsitzes 11 relativ zum Ventilgehäuse 1 verändern, ohne daß sich hierdurch der Rest luftspalt 5 verändert.

Zum weiteren Verständnis des Kraftstoffeinspritzventils sei noch darauf hingewiesen, daß der über die Kraftstoffeinlaßöffnung 18 einströmende Kraftstoff zunächst in eine Ventilkammer 28 und von dort über Bohrungen 29 im Führungskörper 22 zum Ventilschließglied 10 gelangt. Bei geöffnetem Ventilschließglied 10 vermag der Kraftstoff dann durch den Ventilsitz 11 und eine Ventilplatte 30 hindurch zu einem Auslaß 31 zu gelangen. Schräge Bohrungen 32, 33 in der Ventilplatte 30 bewirken, daß der Kraftstoff mit einem Drall das Kraftstoffeinspritzventil verläßt.

**Ansprüche**

1. Elektromagnetisch betätigbares Kraftstoffeinspritzventil für Einspritzanlagen von Brennkraftmaschinen, mit einem Ventilgehäuse, einem innerhalb des Ventilgehäuses angeordneten, von einer feststehenden Magnetwicklung umgebenen Weicheisenkern und einem diesen gleichachsig und unter Bildung eines Arbeitsluftspaltes gegenüberstehenden Anker, der ein einen Ventilauslaß steuerndes Ventilschließglied aufweist und eine untere sowie eine obere Führungsfläche hat, mit der er im Ventilgehäuse geführt ist, wobei die untere Führungsfläche nahe des Ventilschließgliedes vorgesehen ist, dadurch <u>gekennzeichnet</u>, daß die obere Führungsfläche (12) unmittelbar unterhalb der Magnetwicklung (3) vorgesehen und dort innerhalb einer Führungsbohrung - (15) des Ventilgehäuses (1) geführt ist.

2. Kraftstoffeinspritzventil nach Anspruch 1, dadurch gekennzeichnet, daß das Ventilgehäuse (1) unmittelbar unterhalb der Magnetwicklung (3) eine nach innen weisende Ringscheibe (14) hat, in der die Führungsbohrung (15) koaxial zum Weicheisenkern (2) vorgesehen ist.

3. Kraftstoffeinspritzventil nach den Ansprüchen 1 oder 2, dadurch gekennzeichnet, daß am Anker - (7) unterhalb der Ringscheibe (14) ein flanschartiger, nach außen gerichteter, von unten her gegen die Ringscheibe (14) bewegbarer Anschlagkragen (19) vorgesehen ist.

4. Kraftstoffeinspritzventil nach einem oder mehreren der vorangehenden Ansprüche, dadurch gekennzeichnet, daß der Weicheisenkern (2) durch ein Schraubteil gebildet ist, dessen ankerseitige Stirnfläche (4) eine Begrenzung des Arbeitsluftspaltes bildet und welches axial verstellbar im Ventilgehäuse (1) angeordnet ist.

5. Kraftstoffeinspritzventil nach einem oder mehreren der vorangehenden Ansprüche, dadurch gekennzeichnet, daß in der Ringscheibe (14) zumindest ein zur Magnetwicklung (3) führender, axialer Durchlaß (16) vorgesehen ist und das Ventilgehäuse (1) in Höhe des oberen Endes der Magnetwicklung (3) einen Rücklaufauslaß (17) hat.

6. Kraftstoffeinspritzventil nach einem oder mehreren der vorangehenden Ansprüche, dadurch gekennzeichnet, daß eine Kraftstoffeinlaßöffnung - (18) unterhalb der Ringscheibe (14) des Ventilgehäuses (1) vorgesehen ist.

7. Kraftstoffeinspritzventil nach einem oder mehreren der vorangehenden Ansprüche, dadurch gekennzeichnet, daß die untere Führungsfläche - (13) des Ankers (7) von einem Führungskörper - (22) geführt ist, der nach außen hin dichtend in einer koaxialen, nach unten hin offenen Innenbohrung (23) des Ventilgehäuses (1) sitzt.

8. Kraftstoffeinspritzventil nach einem oder mehreren der vorangehenden Ansprüche, dadurch gekennzeichnet, daß zwischen einer oberen Stirnfläche (25) des Führungskörpers (22) und einer zum Auslaß (31) des Einspritzventils weisenden Schulter (27) des Ventilgehäuses (1) ein Distanzring (26) angeordnet ist und der Führungskörper - (22) den Ventilsitz (11) aufweist.

9. Kraftstoffeinspritzventil nach einem oder mehreren der vorangehenden Ansprüche, dadurch gekennzeichnet, daß der Führungskörper (22) durch einen Düsenkörper (24) in der Innenbohrung (23) gehalten ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 042 799 (BENDIX) <br> * Seite 6, Zeile 23 - Seite 9, Zeile 38; Figur 1 * | 1,4 | F 02 M  51/06 |
| A | | 2,6-9 | |
| | --- | | |
| Y | DE-C- 743 620 (FUSCALDO) <br> * Insgesamt * | 1,4 | |
| A | | 6,7 | |
| | --- | | |
| A | US-A-4 360 161 (CLAXTON) <br> * Spalte 7, Zeile 1 - Spalte 9, Zeile 52; Figur 2 * | 1,2,4 | |
| | --- | | RECHERCHIERTE SACHGEBIETE (Int. Cl.4) |
| A | FR-A-1 553 610 (BOSCH) <br> * Seite 2, linke Spalte, Mitte - Seite 3, rechte Spalte, Mitte; Figur 1 * | 1 | F 02 M |
| | --- | | |
| A | DE-A-3 151 368 (NISSAN) <br> * Seite 3, Zeilen 6-16; Figur 1 * | 1 | |
| | --- | | |
| A | GB-A- 483 454 (AEROPLANI CAPRONI) <br> * Insgesamt * | 1 | |
| | ---            -/- | | |

Der vorliegende Recherchenbericht wurde für alle Patentansprüche erstellt.

| Recherchenort | Abschlußdatum der Recherche | Prüfer |
|---|---|---|
| DEN HAAG | 12-05-1987 | FRIDEN C.M. |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 149 916 (AISAN KOGYO) <br> * Seite 11, Zeile 26 - Seite 12, Zeile 29; Figur 2 * <br><br> --- | 2,3 | |
| A | PATENT ABSTRACTS OF JAPAN, Band 8, Nr. 180 (M-318)[1617], 18. August 1984; & JP-A-59 70 870 (HITACHI SEISAKUSHO K.K.) 21.04.1984 <br> * Zusammenfassung; Figuren 6,7C * <br><br> --- | 5 | |
| A | PATENT ABSTRACTS OF JAPAN, Band 9, Nr. 220 (E-341)[1943], 6. September 1985; & JP-A-60 79 154 (NIPPON DENSO K.K.) 04.05.1985 <br> * Zusammenfassung; Figur 2 * <br><br> ----- | 5 | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 12-05-1987 | FRIDEN C.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82